# EUROPEAN PATENT SPECIFICATION

(11) **EP 2 434 792 B1**
(45) Date of publication and mention of the grant of the patent: **09.07.2014**
(21) Application number: 09844807.9
(22) Date of filing: 17.09.2009
(51) Int. Cl.: H04W 12/00, H04M 3/51

(54) **SYSTEM AND METHOD FOR MONITORING VIRTUAL AGENTS**
SYSTEM UND VERFAHREN ZUR ÜBERWACHUNG VIRTUELLER AGENTEN
SYSTÈME ET PROCÉDÉ PERMETTANT DE SURVEILLER DES SIÈGES VIRTUELS

(30) Priority: 20.05.2009 CN 200910138486
(43) Date of publication of application: 28.03.2012
(73) Proprietor: ZTE Corporation, Shenzhen, Guangdong 518057 (CN)
(72) Inventor: QIAN, Chunxiao, Shenzhen Guangdong 518057 (CN); WANG, Peng, Shenzhen Guangdong 518057 (CN); HE, Xuyi, Shenzhen Guangdong 518057 (CN); PAN, Tingli, Shenzhen Guangdong 518057 (CN)
(74) Representative: Gervasi, Gemma
(86) International application number: PCT/CN2009/074011
(87) International publication number: WO 2010/133055

(56) References cited:
- EP-A2- 1 185 064
- CN-A- 1 627 780
- CN-A- 1 741 669
- CN-A- 101 079 933
- CN-A- 101 262 623
- US-A1- 2009 122 972

## Description

### Technical Field

The present invention relates to the virtual call center system of communication and the method thereof, and more especially, to a system and method for monitoring states of virtual agents.

### Background of the Related Art

To date, with the rapid development of communication technology, the call center is more and more widely used. With the coming of the 3G era, high efficiency, qualified service, low cost, and high profits are objects pursued by all major operators. The traditional manual call center does not adapt to the fierce market competition. Accordingly, the virtual call center is born. In the virtual call center, agents of the virtual call center might be a plurality of terminal equipment, such as the fixed phones of the traditional agent terminals, mobile phones, personal handy-phone systems, or software phones (soft phones). The appearance of these terminals greatly reduces the operators' operating costs and also provides qualified services.

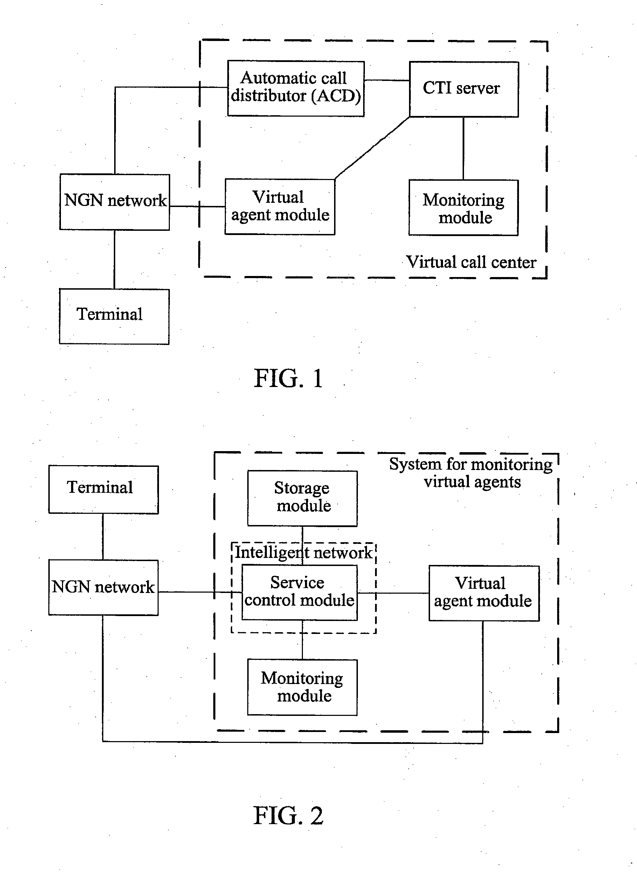

Currently, the structure of the relatively advanced virtual call center is shown as FIG. 1, the virtual call center comprises: an Automatic Call Distributor (ACD), a Computer Telecommunications (CTI) server, a virtual agent module composed of manual agents and the soft phones binding with the manual agents, and a monitoring module. The working process is as follows.

The calls of the terminals access the ACD via the Next Generation Network (NGN), and the ACD forwards the calls to the CTI server; the CTI server selects the virtual agent in the virtual agent module via queuing and routing functions to provide all kinds of services for the incoming call, such as the consulting service and so on; the monitoring module monitors the states of the virtual agents (soft phones or fixed phones), such as whether the virtual agent is in the answering state or not or whether the virtual agent is in-service or not and so on via the information reported by the CTI server.

The document EP 1185064 A2 discloses a system and method for effectuating operator-assisted services in a contact center environment by using mobile agents disposed in a hybrid telecommunications network. Upon receiving a wireless mobile agent's registration request at an HLR, the mobile agent's information is forwarded to an SCP. The SCP is operable to provide the mobile agent's location information to a contact center responsible for a particular operator-assisted service. When the SCP is queried by a service switching node responsive to an incoming call, the SCP interacts with the contact center upon determining that the incoming call involves the operator-assisted service. The contact center is operable to select a mobile agent (or none at all) from a plurality of registered agents based on the agents' profile and location information, in conjunction with the call context information supplied by the SCP.; Based on the selection by the contact center, the SCP transmits appropriate routing information to the service switching node for terminating the call to the mobile agent accordingly.

The document US 2009/122972 A1 discloses systems and methods for maintaining and operating agent nodes. In some embodiments described in the document, calls, contacts, and other work units may be routed to individual customer service agents via a centralized queue based on a variety of factors. Some embodiments described in the document may provide market-based call pricing and customer service agent compensation.

However, with the popularity of the virtual call center, many enterprises open a plurality of relatively lightweight virtual call centers, and problems emerge therewith.

First, many enterprise groups open service hotlines, and in order to provide 24-hour and 7-day service with high quality, these enterprise groups not only use the fixed phones or the soft phones, but also are starting to use the mobile phones as the virtual agent phones. However, the monitoring module in the conventional virtual call center can only monitor the soft phones or fixed phones, and since the mobile phones have a different mechanism, their state information is usually stored in the Home Location Register (HLR) or the Visitor Location Register (VLR), thus the monitoring module is difficult to obtain their state information and therefore is difficult to monitor the virtual agents which uses the mobile phones.

Second, the existing virtual call center is relatively large, the equipment cost is relatively high and the equipment functions are complicated. However, most enterprises actually do not need very complicated functions, and if such system is installed, the functions can be applied are not so many, but the cost is relatively high, which makes the performance price ratio of the system is very low.

### Summary of the Invention

The technical problem to be solved in the present invention is to provide a system and a method for monitoring virtual agents, which are able to monitor the virtual agents that use mobile phones, thereby improving the services of the virtual call center.

In order to solve the aforementioned technical problem, the present invention provides a system according to claim 1 and a method according to claim 7. Further improvements and embodiments are provided in the dependent claims.

Also provided is a system for monitoring virtual agents, and the system comprises: a service control module loaded in an intelligent network, a storage module and a virtual agent module that are connected with the service control module respectively; wherein the service control module is configured to: perform at least called party subscription with a mobile terminal that needs to be registered as a virtual agent and store called party subscription information into the storage module; configured to monitor state information of the mobile terminal that is registered as the virtual agent via the intelligent network and store the state information in the storage module; also configured to select said virtual agent to provide service for an incoming call according to the state information;
the storage module is configured to store the called party subscription information as well as information of the virtual agent including the state information, and store information of the incoming call;
the virtual agent module is configured to provide a corresponding virtual agent to serve the incoming call under selection of the service control module.

Furthermore,
the state information of the mobile terminal monitored by the service control module includes: power-on or shutdown state information of the mobile terminal and service state information when the mobile terminal acts as the virtual agent;
information of the virtual agent stored in the storage module includes one or more of: a number of the mobile terminal, the power-on or shutdown state information, as well as the service state information.

Furthermore,
the power-on or shutdown state information of the mobile terminal monitored by the service control module includes: actual power-on and/or actual shutdown state information, wherein the actual power-on or actual shutdown state information is acquired from a Home Location Register (HLR) or a Visit Location Register (VLR); a mobile terminal in an actual shutdown state will not be selected as the virtual agent;
the service state information monitored by the service control module includes in-service or service ending state information of the virtual agent.

Furthermore,
the power-on or shutdown state information of the mobile terminal monitored by the service control module also includes: virtual power-on and/or virtual shutdown state information, wherein the virtual power-on or virtual shutdown state information is acquired by one or more access ways provided for the mobile terminal to configure virtual power-on or virtual shutdown; a mobile terminal in the virtual shutdown state will not be selected as the virtual agent.

Furthermore,
the service control module is also configured to perform calling party subscription with the mobile terminal registered as the virtual agent and store calling party subscription information into the storage module,
the state information of the mobile terminal monitored by the service control module includes: the state information when the mobile terminal performs a call acting as an ordinary call user;
the storage module is also configured to store the calling party subscription information,
the information of the virtual agent stored in the storage module also includes: state information that said call is in-calling and/or call ending.

Furthermore, the system also comprises a monitoring module connected to the service control module, wherein
the service control module is also configured to send a corresponding type message to the monitoring module with respect to the state information at the same time when storing the state information of the virtual agent;
the corresponding type messages includes one or more of: a message denoting an actual power-on or actual shutdown state of said mobile terminal, a message denoting a virtual power-on or virtual shutdown state of said mobile terminal, a message denoting that the virtual agent is in-service or the service ending state, and a message denoting that the mobile terminal as an ordinary call user is in a calling or call ending state;
the monitoring module is also configured to determine and display a state of a corresponding virtual agent according to the corresponding type message received from the service control module.

Also provided is a method for monitoring virtual agents, and the method comprises:
when a mobile terminal needs to be registered as a virtual agent, performing at least called party subscription with the mobile terminal and storing called party subscription information; and,
monitoring state information of the mobile terminal registered as the virtual agent via an intelligent network, storing the state information, and selecting the virtual agent to serve an incoming call according to the state information.

Furthermore,
the step of monitoring the state information of the mobile terminal comprises: monitoring and storing power-on and/or shutdown state information of the mobile terminal; and/or monitoring and storing service state information when the mobile terminal acts as the virtual agent.

Furthermore,
the step of monitoring the power-on or shutdown state information of the mobile terminal comprises: sending a request to a Home Location Register (HLR) or a Visitor Location Register (VLR) and storing actual power-on and/or actual shutdown state information of the mobile terminal fed back from the HLR or VLR; wherein the mobile terminal in an actual shutdown state will not be selected as the virtual agent;
the step of monitoring the service state information comprises: acquiring and storing the state information of the virtual agent being in-service via a response message that the virtual agent is connected to a call returned through the intelligent network; or, acquiring and storing the state information that the virtual agent service ends via a response message that the virtual agent hangs up a call returned through the intelligent network.

Furthermore, the step of monitoring the power-on or shutdown state information of the mobile terminal also comprises:
providing one or more access ways for the mobile terminal to configure virtual power-on or virtual shutdown, storing the state information of the virtual power-on and/or virtual shutdown of the mobile terminal acquired by the access ways; wherein the mobile terminal in a virtual shutdown state will not be selected as the virtual agent.

Furthermore, the method also comprises:
when the mobile terminal needs to be registered as the virtual agent, performing calling party subscription with the mobile terminal, and storing calling party subscription information;
the step of monitoring the state information of the mobile terminal also comprises: monitoring and storing in-calling state information of the mobile terminal as an ordinary call party;
wherein the step of monitoring the in-calling state information of the mobile terminal as the ordinary call party comprises: acquiring and storing in-calling state information of the mobile terminal via a response message that the mobile terminal is connected to the call returned through the intelligent network; or, acquiring and storing call ending state information of the virtual agent via a response message that the virtual agent hangs up the call returned through the intelligent network.

Furthermore, the method also comprises:
at the same time when monitoring and storing the state information of the virtual agent, displaying the state information of the virtual agent with a corresponding type of state indication identifiers with respect to the state information of the virtual agent; wherein the corresponding type of state indication identifiers includes one or more of: an identifier denoting an actual power-on or actual shutdown state of said mobile terminal, an identifier denoting a virtual power-on or virtual shutdown state of said mobile terminal, an identifier denoting that the virtual agent is an in-service or service ending state, and an identifier denoting that the mobile terminal as an ordinary call user is an in-calling or call ending state.

The system and method for monitoring virtual agents provided in the present invention enlarge the monitoring scope of the virtual agents. Besides monitoring the virtual agents that use the traditional soft phone and the fixed phone, the system and the method also support to monitor the virtual agents that use the mobile phones. In addition, the service control module and the storage module are used instead of the original ACD and CTI servers, which greatly simplifies the complexity of the system, changes the virtual call center from the heavyweight to the lightweight, and thus can better adapt to different market demands. The technical scheme of the present invention makes the best use of different information to improve the customer satisfaction and market competitiveness of products and services.

### Brief Description of Drawings

FIG. 1 is a structural schematic diagram of the existing virtual call center;
FIG. 2 is a structural schematic diagram of the system for monitoring virtual agents in accordance with the present invention;
FIG. 3 is one application example of the method in accordance with the present invention, that is, a flow chart of monitoring the service state when a mobile virtual agent acts as the called party; and
FIG. 4 is another application example of the method in accordance with the present invention, that is, a flow chart of monitoring the ordinary call state when a mobile virtual agent acts as the calling party.

### Preferred Embodiments of the Present Invention

The inventive concept of the system and the method for monitoring virtual agents provided in the present invention comprises: when the service control module in the monitoring system needs to register a mobile terminal as a virtual agent, performing the calling/called party subscription with the mobile terminal in advance and storing the subscription information; monitoring and storing the state information of the mobile terminal which is registered as the virtual agent via the intelligent network; at the same time, displaying the state of the virtual agent with different types of state identifiers; and selecting a virtual agent to serve an incoming call according to the state information of the virtual agent.

In the following, the technical scheme of the present invention will be described in detail with reference to the accompanying drawings and preferred embodiments.

FIG. 2 is a structural schematic diagram of the system for monitoring virtual agents provided in the present invention. With the system, a lightweight virtual call center system can be composed. The system for monitoring virtual agents comprises a service control module loaded in an intelligent network, a storage module, a monitoring module and a virtual agent module; wherein:
the service control module is connected with the storage module, the monitoring module, the virtual agent module, and the NGN network respectively; the service control module is used to store the subscription information of the calling/called party subscription performed with the mobile terminal number into the storage module when the mobile terminal needs to be registered as a virtual agent; continuously acquire the state of actual power-on or actual shutdown or virtual power-on or virtual shutdown of the mobile terminal registered as a virtual agent and store the corresponding state information into the storage module;
when receiving a call of a terminal requesting for service via the NGN network, according to the virtual agent information obtained from the storage module, if a subscribed mobile terminal is selected to assign to act as a virtual agent to serve the incoming call from the virtual agent module, acquire the service state of the virtual agent via the intelligent network; or, when receiving a call from the subscribed mobile terminal as an ordinary calling/called party, connecting the corresponding call for the subscribed mobile terminal, and acquire the ordinary call state of this virtual agent via the intelligent network;
at the same time when storing the corresponding information of the service state or the ordinary call state in the storage module, send the information of the service state or the ordinary call state in different types of messages to the monitoring module;
the storage module is used to store the virtual agent information and the subscription information of the calling/called party subscription of the mobile terminal registered as a virtual agent, as well as the call queue and the incoming call information in the call queue.

The monitoring module is used to determine and display the corresponding virtual agent state according to the corresponding type of messages received from the service control module.

The virtual agent module is connected with the NGN network; the virtual agent module is used to provide a corresponding virtual agent to serve the incoming call under the routing selection of the service control module, wherein serving the incoming call at least includes binding the virtual agent with the mobile number.

In general, when receiving a call of the terminal requesting for service, the service control module writes the incoming call information (such as the call number and so on) into the end of one call queue in the storage module, and then queries the incoming call information (the incoming call number) at the head of the call queue, and selects the incoming call at the head of the call queue as the service object, and then selects and assigns a virtual agent to serve the incoming call. The aim is to let the incoming calls in the call queue wait orderly in the case when great many incoming calls requesting for service are received and the virtual agent module cannot provide enough idle virtual agents to serve all the incoming calls in time.

Herein, the service control module regularly sends a state request message to the HLR/VLR to query the actual power-on or shutdown state of the mobile terminal registered as the virtual agent. A virtual agent denoted as in the actual shutdown state will not be selected to serve the incoming call.

The service control module might also provide a plurality of access ways, such as ways of the short message or Interactive Voice Response (IVR) and so on, for the virtual agents to configure the virtual power-on and shutdown state of the virtual agent itself. A virtual agent denoted as in the virtual shutdown state will not be selected to serve the incoming call.

According to the response message sent from the intelligent network, the service control module stores the call state information of the acquired virtual agent, the call state information of the virtual agent not only includes the service state information that the virtual agent acts as the service provider to serve the incoming calls, but also includes the ordinary call state information that the virtual agent acts as an ordinary calling/called party.

The types of the messages sent by the service control module to the monitoring module includes any one of the following types of messages: the message indicating the actual power-on or shutdown state of the mobile terminal registered as a virtual agent, the message indicating the virtual power-on or shutdown state of the mobile terminal registered as a virtual agent, the message indicating that the state of the mobile terminal registered as a virtual agent is in-service or service ending, and the message indicating the state of the mobile terminal registered as a virtual agent is in the ordinary calling or the ordinary call ending.

For example, if the feedback acquired by the service control module from the HLR/VLR is that the mobile terminal is in the power-on state, the message type sent to the monitoring module is the actual power-on type, e.g. denoted with "1"; if the acquired feedback is the shutdown state of the mobile state, the message type sent to the monitoring module is the actual shutdown type, e.g. denoted with "2". If the service control module acquires that the virtual agent configures its own state as virtual power-on via the IVR, the message type sent to the monitoring module is the virtual power-on type, e.g. denoted with "3"; if the service control module acquires that the virtual agent configures its own state as virtual shutdown (but the virtual agent is actually in the actual power-on state at this moment) via the IVR, the message type sent to the monitoring module is the virtual shutdown type, e.g. denoted with "4".

The state information of the virtual agent stored in the storage module can be state information such as the power-on or shutdown state information, in-service or service ending state information of the virtual agent, or in-calling or call ending state and so on of the mobile terminal registered as the virtual agent.

The state of the virtual agent is displayed by the monitoring module in the form of the interface, such as displayed in the form of the WEB portal (web page), displayed in the form of the ordinary C/S Client (for example the application program installed in the client), or displayed by embedding in other systems (for example the enterprise switchboard system mentioned later).

Each virtual agent corresponds to a state indication identifier on the display interface, and the state indication identifier might be forms such as pictures, letters, indication lights and animations and so on. The corresponding interface identifier of the virtual agent is located after receiving the state information of the virtual agent from the service control module, and the state display of the state indication identifier corresponding to the interface is determined according to the message type (such as power-on, shutdown, in-service or service ending, or in-calling or call ending and so on) and call type (service call, or ordinary call, and so on) in the message.

The virtual agents in the virtual agent module might use soft phones, fixed phones or mobile phones. The state of each mobile phone is stored in the HLR/VLR. When the mobile phone number is registered as a virtual agent, the mobile phone number requires subscribing as the calling/called party into the this system so that every call related to this mobile phone number is transferred to this system, therefore, the monitoring module in this system can monitor the virtual agents that use the mobile phones in real-time.

It can be seen by comparing FIG. 1 with FIG. 2 that the service control module and the storage module are used instead of the ACD and the CTI servers in this system. Thus the system is simplified and also supports to monitor the mobile phones in the virtual agents.

The present invention also provides a method for monitoring virtual agents with respective to the aforementioned system, and the method comprises following steps.
(1) When a mobile terminal number needs to be registered as a virtual agent, the mobile terminal number is subscribed as the calling/called party into the monitoring system and the subscription information is stored;
(2) The power-on or shutdown state of the mobile terminal number registered as the virtual agent is monitored and displayed;
   Herein, the present invention defines the power-on or shutdown state of the virtual agent binding with the mobile number by the following two ways: one is the actual power-on or shutdown state of the virtual agent; the other is the virtual power-on or shutdown state of the virtual agent, and the virtual power-on or shutdown state is acquired by providing the access way for the virtual agent configuring its own virtual power-on/shutdown state.
   When querying the actual state information of the mobile terminal, a state request message is regularly sent to the HLR, and if the obtained feedback is the power-on or shutdown state of the mobile terminal, the information denoting that mobile terminal is in the actual power-on or shutdown state is written in the local to be stored. A virtual agent which is denoted as in the actual shutdown state is not selected to serve the incoming calls.
   In certain scenarios, a plurality of access ways such as the short message and the IVR and so on can be provided for virtual agents to configure their own power-on or shutdown state. If it is obtained that the virtual agent configures its own state to be virtual power-on or shutdown state via the IVR, the information denoting that the mobile terminal is in the virtual power-on or shutdown state is written in the local to be stored. A virtual agent in the virtual shutdown state is not selected to serve incoming the calls.
   The state indication identifier corresponding to the virtual agent is configured as the corresponding type to be displayed after acquiring the aforementioned different states of the virtual agent.
   The purpose why the present invention defmes above two types of power-on or shutdown states for the virtual agents that use the mobile terminals is to provide flexible applications for the mobile terminal users that provide service as the virtual agents. When such a user is in a rest period, the mobile terminal user can configure that the mobile terminal is in the virtual shutdown state, and the user can call the numbers of relatives or friends etc. as an ordinary user during the period without acting as a virtual agent to serve the incoming calls.
(3) One virtual agent is assigned to serve the incoming call via the routing selection according to the obtained virtual agent information and the service content after receiving the call of the terminal requesting for service, for example, the assigned virtual agent might be the registered mobile terminal number; or, when receiving the call from the mobile terminal number registered as the virtual agent that acts as an ordinary calling/called party, the corresponding call is connected for the ordinary calling/called party.
   In general, when receiving a call of the terminal requesting for service, the incoming call information is written into the end of one local call queue, and then the incoming call information (the incoming call number) at the head of the call queue is queried to be selected as the service object, and then a virtual agent is selected and assigned to serve the service object. The aim is to let the incoming calls in the call queue wait orderly in the case when great many incoming calls requesting for service are received and idle virtual agents cannot be provided to serve all the incoming calls in time.
   Besides acting as the virtual agent called party to provide service for the incoming calls, the mobile terminal registered as the virtual agent might also act as the ordinary calling party to call other terminals (or act as the ordinary called party to be called by other terminals). When the virtual agent acts as an ordinary calling party to call other terminals, whether the called party is already registered in this system or not is confirmed by querying to acquire the called number information, and if the called party is already registered in this system, it means that the call is an system internal call, otherwise, it means that the is a call system external call, and the system correspondingly applies different processing flows to connect the called party for the ordinary calling party to perform a call.
   The reason why the present invention monitors the call states of calling or called on the virtual agent acting as an ordinary calling party is that the virtual agent might not be selected by the system as the service provider to provide service in the ordinary call calling process. That is, the present invention can monitor the state of the virtual agents that use the mobile terminals in real-time.
(4) When the virtual agent is in a call, the call state information corresponding to the virtual agent is monitored and displayed via the response message of connecting or hanging up a call from the intelligent network.

According to the response message sent from the intelligent network, at the same time when the acquired call state information of the virtual agent is stored locally, various states of the virtual agents are also displayed by different state indication identifiers.

The call state information of the virtual agent includes not only the service state information that the virtual agent acts as the service provider to serve the calling terminal, but also the ordinary call state information when the virtual agent acts as the ordinary calling/called party.

When the calling terminal is connected with the virtual agent, the service control module sends a message of "in-service" (or the message of "in-calling") of the virtual agent; when the calling terminal or the virtual agent hangs up, the service control module sends a message of "service ending" (or the message of "call ending") of the virtual agent.

In the following, the enterprise switchboard system is taken as application examples to illustrate the process that the monitoring system of the virtual agents is embedded to monitor the virtual agents in accordance with the present invention. The process is mainly illustrated with respect to monitoring the virtual agents that use the mobile phones, including the process that a mobile phone acts as the called party to provide services for other phones as well as the process that the mobile phone acts as an ordinary calling party to call other phones.

The enterprise switchboard system here can provide a plurality of functions for enterprises, besides providing transfer service acting as an ordinary switchboard, and also provide the virtual agent function. Therefore, calling/called party subscription to the local system should be performed on a mobile terminal number registered as a virtual agent. Thus the system can monitor the state of the virtual agent.

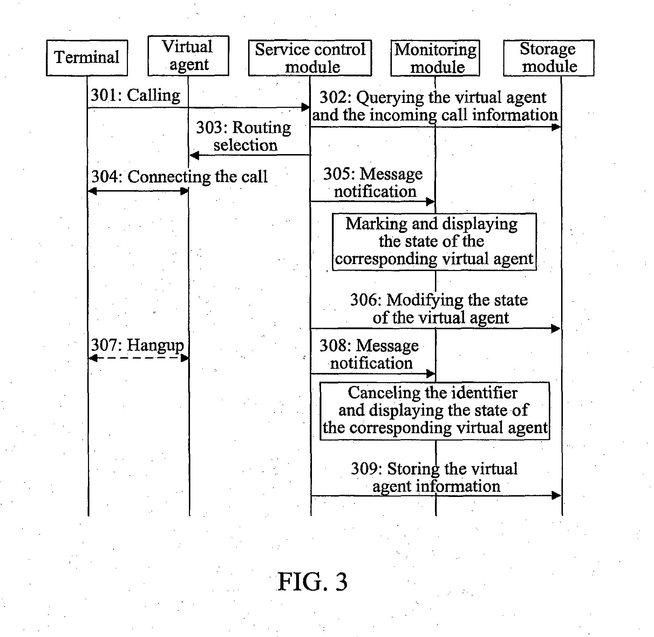

When the terminal user calls the enterprise group switchboard and the agent is selected to provide service, the switchboard system might select a virtual agent to serve the incoming calls according to the queue strategy, as shown in FIG. 3, when the selected virtual agent is a mobile phone, the flow comprises the following steps.
301: when a certain terminal calls the switchboard number of the enterprise group, the call is connected to the service control module.
302: the service control module inserts the phone number information of the call into the call queue information list in the storage module; queries the virtual agent information and the incoming call information at the head of the queue in the call queue information list in the storage module.
   Herein, the incoming call information such as the calling number and so on acts as the service object selected in the call queue; the virtual agent information might be the last serving time of the virtual agent or the virtual agent number and so on. The service control module selects one virtual agent that has not served for the maximum time or whose serving times are minimum as the selected service object to provide service according to the last serving time of the virtual agent.
303: the service control module selects a virtual agent that uses the mobile phone to provide service for the selected incoming call according to the virtual agent information and the service content.
   The service control module selects one virtual agent from a plurality of virtual agent branches in the virtual agent module via a queue algorithm such as algorithms of not serving for the maximum time or the serving times are the minimum and so on.
304: the calling terminal is connected with the virtual agent and performs the service call.
305: the service control module sends the "in-service" type message to the monitoring module after receiving the response message that the call is connected via the intelligent network.
   The service control module might use "5" to denote the "in-service" type message.
   The monitoring module configures the state of the corresponding virtual agent identifier in the WEB portal as "in-service" and displays the state after receiving the message.
306: the service control module modifies the virtual agent state and writes it into the storage module simultaneously,
which is for the purpose of ensuring that the virtual agent is not selected over again before hanging up.
307: the virtual agent completes the service call with the terminal, and either of them hangs up.
308: the service control module sends the "service ending" type message to the monitoring module after receiving the response message of hangup through the intelligent network.
   The service control module might use "6" to denote the "service ending" type message.
   The monitoring module cancels the "in-service" state of the corresponding virtual agent identifier in the WEB portal and displays the information after receiving the message.
309: The service control module modifies the information of the serving virtual agent at this time again and writes the information into the storage module.

The virtual agent information might be the virtual agent state, the end time of the service and service duration and so on.

Since the number of the mobile terminal registered as the virtual agent is also an ordinary phone number, it can act as the calling/called party to directly call other phone numbers, and other terminals might also directly call the phone number of the virtual agent. Since the mobile number is subscribed in the system via the calling/called party subscription, any call related to the virtual agent would enter the enterprise switchboard system. Therefore, the monitoring module of the enterprise switchboard might monitor the virtual agent in real-time.

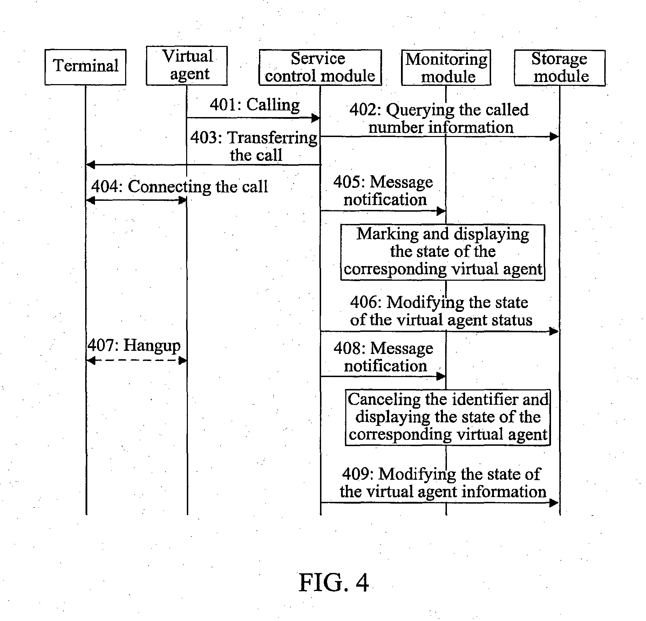

The process for monitoring the ordinary call state when a mobile registered as the virtual agent acts as the calling party of the ordinary call is shown as FIG. 4 and the process comprises the following steps.
401: when the mobile phone registered as the virtual agent dials an external phone number to call the phone, and since the virtual agent acts as a calling party subscription number, the call enters into the service control module of the monitoring system of the virtual agents embedded in the enterprise switchboard system.
402: the service control module queries the called number information in the storage module.
   For example, whether the called number is registered in the system or not is queried, if not registered, it indicates that the called number is an external phone number of the enterprise.
403: the service control module finds that the called number is not registered in the system, and transfers the external called terminal.
404: the terminal is connected with the virtual agent to perform an ordinary call.
405: the service control module sends the "in-calling" type message to the monitoring module after receiving the response message that the call is connected via the intelligent network.
   The service control module might use "7" to denote the "in-calling" type message.
   The monitoring module configures the state of the corresponding virtual agent identifier in the WEB portal as "in-calling" and displays the state after receiving the message.
406: the service control module modifies the state information of the virtual agent and writes the state information into the storage module so as to ensure that the virtual agent will not be selected over again before hanging up.
407: the call between the virtual agent and the called party ends, and either of the virtual agent and the called party hangs up.
408: the service control module sends the "call ending" type message to the monitoring module after receiving the response message of hangup via the intelligent network.
   For example, the service control module might use "8" to indicate the "in-calling" type message.
   The monitoring module cancels the "in-calling" state of the corresponding virtual agent identifier in the WEB portal and displays the state.
409: The service control module modifies the virtual agent information at this time again and writes the information into the storage module.

For example, the virtual agent information might be the virtual agent state.

In summary, the system and the method for monitoring virtual agents in accordance with the present invention expand the functions in the existing virtual call center, and are able to support to monitor the state of the virtual agent that uses the mobile phone, decrease the construction costs of the virtual call center, take the better use of resources, and thus the use of the system is easier, which increases the performance price ratio of the system and the market competitiveness, therefore, the present invention has obvious economic and social benefits.

The above description is the preferred embodiment of the present invention rather than the restrictions on the protection scope of the present invention. The present invention might have a plurality of other embodiments. Those skilled in the art can make various corresponding medications and transformations according to the description of the present invention.

### Industrial Applicability

The system and method for monitoring virtual agents provided in the present invention enlarge the monitoring scope of the virtual agents. Besides monitoring the virtual agents that use the traditional soft phone and the fixed phone, the system and the method also support to monitor the virtual agents that use the mobile phones. In addition, the service control module and the storage module are used instead of the original ACD and CTI servers, which greatly simplifies the complexity of the system, changes the virtual call center from the heavyweight to the lightweight, and thus can better adapt to different market demands. The technical scheme of the present invention makes the better use of different information to improve the customer satisfaction and market competitiveness of products and services.

## Claims

1. A system for monitoring virtual agents comprising: a service control module loaded in an intelligent network, a storage module and a virtual agent module that are connected with the service control module respectively; **characterized in that**
the service control module is configured to: perform at least called party subscription with a mobile terminal that needs to be registered as a virtual agent to make any ordinary call calling the mobile station enter the system, and store called party subscription information into the storage module; configured to monitor state information of the mobile terminal that is registered as the virtual agent via the intelligent network and store the state information in the storage module; also configured to select said virtual agent to provide service for an incoming call according to the state information, and when receiving an ordinary call calling the mobile terminal that is registered as the virtual agent, connect the call for the mobile terminal, acquire an ordinary call state of this virtual agent via the intelligent network and store the ordinary call state in the storage module;
the storage module is configured to store the called party subscription information as well as information of the virtual agent including the state information and the ordinary call state , and store information of the incoming call;
the virtual agent module is configured to provide a corresponding virtual agent to serve the incoming call under selection of the service control module.

2. The system of claim 1, wherein
the state information of the mobile terminal monitored by the service control module includes: power-on or shutdown state information of the mobile terminal and service state information when the mobile terminal acts as the virtual agent;
information of the virtual agent stored in the storage module includes one or more of: a number of the mobile terminal, the power-on or shutdown state information, as well as the service state information.

3. The system of claim 2, wherein
the power-on or shutdown state information of the mobile terminal monitored by the service control module includes: actual power-on and/or actual shutdown state information, wherein the actual power-on or actual shutdown state information is acquired from a Home Location Register (HLR) or a Visit Location Register (VLR); a mobile terminal in an actual shutdown state will not be selected as the virtual agent;
the service state information monitored by the service control module includes in-service or service ending state information of the virtual agent.

4. The system of claim 3, wherein
the power-on or shutdown state information of the mobile terminal monitored by the service control module also includes: virtual power-on and/or virtual shutdown state information, wherein the virtual power-on or virtual shutdown state information is acquired by one or more access ways provided for the mobile terminal to configure virtual power-on or virtual shutdown;
a mobile terminal in the virtual shutdown state will not be selected as the virtual agent.

5. The system of claim 2, wherein,
the service control module is also configured to perform calling party subscription with the mobile terminal registered as the virtual agent and store calling party subscription information into the storage module,
the state information of the mobile terminal monitored by the service control module includes: the state information when the mobile terminal performs a call acting as an ordinary call user;
the storage module is also configured to store the calling party subscription information,
the information of the virtual agent stored in the storage module also includes: state information that said call is in-calling and/or call ending.

6. The system of any one of claims 3 to 5 also comprising a monitoring module connected to the service control module, wherein
the service control module is also configured to send a corresponding type message to the monitoring module with respect to the state information at the same time when storing the state information of the virtual agent;
the corresponding type messages includes one or more of: a message denoting an actual power-on or actual shutdown state of said mobile terminal, a message denoting a virtual power-on or virtual shutdown state of said mobile terminal, a message denoting that the virtual agent is in-service or the service ending state, and a message denoting that the mobile terminal as an ordinary call user is in a calling or call ending state;
the monitoring module is also configured to determine and display a state of a corresponding virtual agent according to the corresponding type message received from the service control module.

7. A method for monitoring virtual agents **characterized by** comprising:
performing at least called party subscription with a mobile terminal that needs to be registered as a virtual agent to make any ordinary call calling the mobile station enter the system, and storing called party subscription information;
monitoring state information of the mobile terminal registered as the virtual agent via an intelligent network, storing the state information, and selecting the virtual agent to serve an incoming call according to the state information; and
when receiving an ordinary call calling the mobile terminal that is registered as the virtual agent, connecting the call for the mobile terminal, acquiring an ordinary call state of this virtual agent via the intelligent network and storing the ordinary call state.

8. The method of claim 7, wherein
the step of monitoring the state information of the mobile terminal comprises: monitoring and storing power-on and/or shutdown state information of the mobile terminal; and/or monitoring and storing service state information when the mobile terminal acts as the virtual agent.

9. The method of claim 8, wherein
the step of monitoring the power-on or shutdown state information of the mobile terminal comprises: sending a request to a Home Location Register (HLR) or a Visitor Location Register (VLR) and storing actual power-on and/or actual shutdown state information of the mobile terminal fed back from the HLR or VLR; wherein the mobile terminal in an actual shutdown state will not be selected as the virtual agent;
the step of monitoring the service state information comprises: acquiring and storing the state information of the virtual agent being in-service (306) via a response message that the virtual agent is connected to a call returned through the intelligent network; or, acquiring and storing the state information that the virtual agent service ends (309) via a response message that the virtual agent hangs up a call returned through the intelligent network.

10. The method of claim 9, wherein the step of monitoring the power-on or shutdown state information of the mobile terminal also comprises:
providing one or more access ways for the mobile terminal to configure virtual power-on or virtual shutdown, storing the state information of the virtual power-on and/or virtual shutdown of the mobile terminal acquired by the access ways;
wherein the mobile terminal in a virtual shutdown state will not be selected as the virtual agent.

11. The method of claim 10 also comprising:
performing calling party subscription with the mobile terminal that needs to be registered as the virtual agent , and storing calling party subscription information;
the step of monitoring the state information of the mobile terminal also comprises: monitoring and storing in-calling state information of the mobile terminal as an ordinary call party;
wherein the step of monitoring the in-calling state information of the mobile terminal as the ordinary call party comprises:
acquiring and storing in-calling state information of the mobile terminal (406) via a response message that the mobile terminal is connected to the call returned through the intelligent network; or, acquiring and storing call ending state information of the virtual agent (409) via a response message that the virtual agent hangs up the call returned through the intelligent network.

12. The method of any one of claims 9 to 11 also comprising:
at the same time when monitoring and storing the state information of the virtual agent, displaying the state information of the virtual agent with a corresponding type of state indication identifiers with respect to the state information of the virtual agent; wherein the corresponding type of state indication identifiers includes one or more of:
an identifier denoting an actual power-on or actual shutdown state of said mobile terminal, an identifier denoting a virtual power-on or virtual shutdown state of said mobile terminal, an identifier denoting that the virtual agent is an in-service or service ending state, and an identifier denoting that the mobile terminal as an ordinary call user is an in-calling or call ending state.

## Patentansprüche

1. System zum Überwachen von virtuellen Agenten, das umfasst: ein in ein intelligentes Netzwerk geladenes Dienststeuerungsmodul, und ein Speichermodul sowie ein virtuelles-Agenten-Modul, die jeweils mit dem Dienststeuerungsmodul verbunden sind;
**dadurch gekennzeichnet, dass**
das Dienststeuerungsmodul ausgestaltet ist, um: mindestens ein Abonnement einer angerufenen Partei mit einem mobilen Endgerät durchzuführen, das als virtueller Agent registriert werden muss, um zu bewirken, dass jeder gewöhnliche Anruf, der die mobile Station anruft, in das System gelangt, und um Abonnementinformationen der angerufenen Partei in dem Speichermodul zu speichern; ausgestaltet ist, um Statusinformationen des mobilen Endgeräts, das als der virtuelle Agent registriert ist, über das intelligente Netzwerk zu überwachen, und um die Statusinformationen in dem Speichermodul zu speichern; und außerdem ausgestaltet ist, um den virtuellen Agenten zu wählen, um einen Dienst für einen eingehenden Anruf in Übereinstimmung mit den Statusinformationen bereitzustellen, und um, wenn ein gewöhnlicher Anruf empfangen wird, der das mobile Endgerät anruft, das als der virtuelle Agent registriert ist, den Anruf für das mobile Endgerät zu verbinden, einen Status des gewöhnlichen Anrufs von diesem virtuellen Agenten über das intelligente Netzwerk zu beschaffen und den Status des gewöhnlichen Anrufs in dem Speichermodul zu speichern;
das Speichermodul ausgestaltet ist, um die
Abonnementinformationen der angerufenen Partei sowie Informationen von dem virtuellen Agenten, welche die Statusinformationen und den Status des gewöhnlichen Anrufs umfassen, zu speichern, und um Informationen des eingehenden Anrufs zu speichern;
das virtuelle-Agenten-Modul ausgestaltet ist, um einen entsprechenden virtuellen Agenten bereitzustellen, um den eingehenden Anruf unter Auswahl des Dienststeuerungsmoduls zu bedienen.

2. System nach Anspruch 1, wobei
die Statusinformationen des von dem Dienststeuerungsmodul überwachten mobilen Endgeräts umfassen: Informationen über den Eingeschaltet- oder Ausgeschaltet-Status des mobilen Endgeräts und Dienststatusinformationen, wenn das mobile Endgerät als der virtuelle Agent agiert;
Informationen des virtuellen Agenten, die in dem Speichermodul gespeichert sind, eines oder mehrere umfassen von: eine Nummer des mobilen Endgeräts, die Informationen über den Eingeschaltet- oder Ausgeschaltet-Status sowie die Dienststatusinformationen.

3. System nach Anspruch 2, wobei
die Informationen über den Eingeschaltet- oder Ausgeschaltet-Status des mobilen Endgeräts, das von dem Dienststeuerungsmodul überwacht wird, umfassen: Informationen über einen tatsächlichen Eingeschaltet- und/oder einen tatsächlichen Ausgeschaltet-Status, wobei die Informationen über den tatsächlichen Eingeschaltet- oder den tatsächlichen Ausgeschaltet-Status von einem Home Location Register (HLR) oder einem Visit Location Register (VLR) beschafft werden; wobei ein mobiles Endgerät in einem tatsächlichen Ausgeschaltet-Status nicht als der virtuelle Agent gewählt wird;
die von dem Dienststeuerungsmodul überwachten Dienststatusinformationen Informationen des virtuellen Agenten zu einem im-Dienst-Status oder zu einem Dienstende-Status enthalten.

4. System nach Anspruch 3, wobei
die Informationen über den Eingeschaltet- oder Ausgeschaltet-Status des mobilen Endgeräts, das von dem Dienststeuerungsmodul überwacht wird, außerdem enthalten: Informationen über einen virtuellen Eingeschaltet- und/oder einen virtuellen Ausgeschaltet-Status, wobei die Informationen über den virtuellen Eingeschaltet- oder den virtuellen Ausgeschaltet-Status durch einen oder mehrere Zugriffswege, die für das mobile Endgerät bereitgestellt sind, beschafft werden, um ein virtuelles Einschalten oder ein virtuelles Ausschalten zu konfigurieren;
ein mobiles Endgerät in dem virtuellen Ausgeschaltet-Status nicht als der virtuelle Agent gewählt wird.

5. System nach Anspruch 2, wobei
das Dienststeuerungsmodul außerdem ausgestaltet ist, um ein Abonnement der anrufenden Partei mit dem mobilen Endgerät, das als der virtuelle Agent registriert ist, durchzuführen und um die Abonnementinformationen der anrufenden Partei in dem Speichermodul zu speichern,
die Statusinformationen des mobilen Endgeräts, das von dem Dienststeuerungsmodul überwacht wird, umfassen: die Statusinformationen, wenn das mobile Endgerät einen Anruf ausführt, wobei es wie ein gewöhnlicher Anrufbenutzer agiert;
das Speichermodul außerdem ausgestaltet ist, um die Abonnementinformationen der anrufenden Partei zu speichern,
die Informationen des virtuellen Agenten, die in dem Speichermodul gespeichert sind, außerdem umfassen: Statusinformationen darüber, dass der Anruf gerade ausgeführt wird und/oder dass der Anruf endet.

6. System nach einem der Ansprüche 3 bis 5, das außerdem ein Überwachungsmodul umfasst, das mit dem Dienststeuerungsmodul verbunden ist, wobei
das Dienststeuerungsmodul außerdem ausgestaltet ist, um eine Meldung mit einem entsprechenden Typ an das Überwachungsmodul mit Bezug auf die Statusinformationen zu dem gleichen Zeitpunkt zu senden, wenn die Statusinformationen des virtuellen Agenten gespeichert werden;
die Meldung mit dem entsprechenden Typ eines oder mehrere enthält von: eine Meldung, die einen tatsächlichen Eingeschaltet- oder einen tatsächlichen Ausgeschaltet-Status des mobilen Endgeräts beschreibt, eine Meldung, die einen virtuellen Eingeschaltet- oder einen virtuellen Ausgeschaltet-Status des mobilen Endgeräts beschreibt, eine Meldung, die beschreibt, dass sich der virtuelle Agent in einem im-Dienst-Status oder in einem Dienstende-Status befindet, und eine Meldung, die beschreibt, dass sich das mobile Endgerät in einem Anruf- oder Anrufbeendigungsstatus als gewöhnlicher Anrufbenutzer befindet;
das Überwachungsmodul außerdem ausgestaltet ist, um einen Status eines entsprechenden virtuellen Agenten in Übereinstimmung mit dem entsprechenden Meldungstyp, den es von dem Dienststeuerungsmodul empfangen hat, zu bestimmen und anzuzeigen.

7. Verfahren zum Überwachen von virtuellen Agenten,
**dadurch gekennzeichnet, dass** es umfasst, dass:
zumindest ein Abonnement einer angerufenen Partei mit einem mobilen Endgerät, das als ein virtueller Agent registriert werden muss, durchführt wird, um zu veranlassen, dass jeder gewöhnliche Anruf, der die mobile Station anruft, in das System gelangt, und Abonnementinformationen der angerufenen Partei gespeichert werden;
Statusinformationen des mobilen Endgeräts, das als der virtuelle Agent registriert ist, über ein intelligentes Netzwerk überwacht werden, die Statusinformationen gespeichert werden und der virtuelle Agent gewählt wird, um einen eingehenden Anruf in Übereinstimmung mit den Statusinformationen zu bedienen; und
wenn ein gewöhnlicher Anruf empfangen wird, der das mobile Endgerät anruft, das als der virtuelle Agent registriert ist, der Anruf für das mobile Endgerät verbunden wird, ein Status für den gewöhnlichen Anruf von diesem virtuellen Agenten über das intelligente Netzwerk beschafft wird und der Status des gewöhnlichen Anrufs gespeichert wird.

8. Verfahren nach Anspruch 7, wobei
der Schritt des Überwachens der Statusinformationen von dem mobilen Endgerät umfasst, dass: Informationen über einen Eingeschaltet- und/oder einen Ausgeschaltet-Status des mobilen Endgeräts überwacht und gespeichert werden; und/oder Dienststatusinformationen überwacht und gespeichert werden, wenn das mobile Endgerät als der virtuelle Agent agiert.

9. Verfahren nach Anspruch 8, wobei
der Schritt des Überwachens von Informationen über den Eingeschaltet- oder Ausgeschaltet-Status des mobilen Endgeräts umfasst, dass: eine Anfrage an ein Home Location Register (HLR) oder ein Visitor Location Register (VLR) gesendet wird und Informationen über einen tatsächlichen Eingeschaltet- und/oder einen tatsächlichen Ausgeschaltet-Status des mobilen Endgeräts, die von dem HLR oder VLR zurückgemeldet werden, gespeichert werden; wobei das mobile Endgerät in einem tatsächlichen Ausgeschaltet-Status nicht als der virtuelle Agent gewählt wird;
der Schritt des Überwachens der Dienststatusinformationen umfasst, dass: die Statusinformationen des virtuellen Agenten, dass er sich im Dienst befindet (306), über eine Antwortmeldung, dass der virtuelle Agent mit einem Anruf verbunden ist, die durch das intelligente Netzwerk zurückgegeben wurde, beschafft und gespeichert werden; oder die Statusinformationen, dass der Dienst des virtuellen Agenten endet (309), über eine Antwortmeldung, dass der virtuelle Agent einen Anruf beendet, die durch das intelligente Netzwerk zurückgegeben wurde, beschafft und gespeichert werden.

10. Verfahren nach Anspruch 9,
wobei der Schritt des Überwachens der Informationen über den Eingeschaltet- oder den Ausgeschaltet-Status des mobilen Endgeräts außerdem umfasst, dass:
ein oder mehrere Zugriffswege für das mobile Endgerät bereitgestellt werden, um ein virtuelles Einschalten oder ein virtuelles Ausschalten zu konfigurieren, und die Informationen über den virtuellen Eingeschaltet- und/oder den virtuellen Ausgeschaltet-Status des mobilen Endgeräts, die über die Zugriffswege beschafft werden, gespeichert werden;
wobei das mobile Endgerät in einem virtuellen Ausgeschaltet-Status nicht als der virtuelle Agent gewählt wird.

11. Verfahren nach Anspruch 10, das außerdem umfasst, dass:
ein Abonnement einer anrufenden Partei mit dem mobilen Endgerät, das als der virtuelle Agent registriert werden muss, durchgeführt wird und die Abonnementinformationen der anrufenden Partei gespeichert werden;
der Schritt des Überwachens der Statusinformationen des mobilen Endgeräts außerdem umfasst, dass: Statusinformationen des mobilen Endgeräts bei Anrufen als eine gewöhnliche Anrufpartei überwacht und gespeichert werden;
wobei der Schritt des Überwachens der Statusinformationen des mobilen Endgeräts bei Anrufen als die gewöhnliche Anrufpartei umfasst, dass:
Statusinformationen des mobilen Endgeräts bei Anrufen über eine Antwortmeldung, dass das mobile Endgerät mit dem Anruf verbunden ist, die durch das intelligente Netzwerk zurückgegeben wurde, beschafft und gespeichert werden (406); oder Statusinformationen des virtuellen Agenten zum Anrufende über eine Antwortmeldung, dass der virtuelle Agent den Anruf beendet, die durch das intelligente Netzwerk zurückgegeben wurde, beschafft und gespeichert werden (409).

12. Verfahren nach einem der Ansprüche 9 bis 11, das außerdem umfasst, dass:
zum gleichen Zeitpunkt, an dem die Statusinformationen des virtuellen Agenten überwacht und gespeichert werden, die Statusinformationen des virtuellen Agenten mit einem entsprechenden Typ von Statusanzeigekennungen mit Bezug auf die Statusinformationen des virtuellen Agenten angezeigt werden; wobei der entsprechende Typ von Statusanzeigekennungen eines oder mehrere umfasst von:
einer Kennung, die einen tatsächlichen Eingeschaltet- oder einen tatsächlichen Ausgeschaltet-Status des mobilen Endgeräts beschreibt, einer Kennung, die einen virtuellen Eingeschaltet- oder einen virtuellen Ausgeschaltet-Status des mobilen Endgeräts beschreibt, einer Kennung, die beschreibt, dass sich der virtuelle Agent in einem In-Dienst-Status oder einem Dienstende-Status befindet, und einer Kennung, die beschreibt, dass sich das mobile Endgerät als gewöhnlicher Anrufbenutzer in einem Anruf- oder Anrufende-Status befindet.

## Revendications

1. Système pour surveiller des agents virtuels comprenant : un module de commande de service chargé dans un réseau intelligent, un module de mémorisation et un module d'agents virtuels qui sont respectivement connectés au module de commande de service ; **caractérisé en ce que**
le module de commande de service est configuré pour : effectuer au moins un abonnement de tiers appelé avec un terminal mobile qui doit être enregistré en tant qu'agent virtuel pour faire en sorte que n'importe quel appel ordinaire appelant la station mobile entre dans le système, et mémoriser les informations d'abonnement de tiers appelé dans le module de mémorisation ; configuré pour surveiller les informations d'état du terminal mobile qui est enregistré en tant qu'agent virtuel par l'intermédiaire du réseau intelligent et mémoriser les informations d'état dans le module de mémorisation ; également configuré pour sélectionner ledit agent virtuel pour fournir un service pour un appel entrant en fonction des informations d'état, et, lors de la réception d'un appel ordinaire appelant le terminal mobile qui est enregistré en tant qu'agent virtuel, connecter l'appel pour le terminal mobile, acquérir un état d'appel ordinaire de cet agent virtuel par l'intermédiaire du réseau intelligent et mémoriser l'état d'appel ordinaire dans le module de mémorisation ;
le module de mémorisation est configuré pour mémoriser les informations d'abonnement de tiers appelé ainsi que les informations de l'agent virtuel comprenant les informations d'état et l'état d'appel ordinaire et mémoriser les informations de l'appel entrant ;
le module d'agent virtuel est configuré pour fournir un agent virtuel correspondant pour servir l'appel entrant sous la sélection du module de commande de service.

2. Système selon la revendication 1, dans lequel
les informations d'état du terminal mobile surveillées par le module de commande de service comprennent : des informations d'état de mise sous tension et de coupure du terminal mobile et des informations d'état de service lorsque le terminal mobile agit en tant qu'agent virtuel ;
les informations de l'agent virtuel mémorisées dans le module de mémorisation comprennent un ou plusieurs : d'un numéro du terminal mobile, d'informations d'état de mise sous tension et de coupure, ainsi que d'informations d'état de service.

3. Système selon la revendication 2, dans lequel
les informations d'état de mise sous tension et de coupure du terminal mobile surveillées par le module de commande de service comprennent : des informations d'état de mise sous tension réelle et/ou de coupure réelle, dans lequel les informations d'état de mise sous tension réelle ou de coupure réelle sont acquises auprès d'un registre des abonnés nominaux (HLR) ou d'un registre de localisation des visiteurs (VLR) ; un terminal mobile dans un état de coupure réelle ne sera pas sélectionné en tant qu'agent virtuel ;
les informations d'état de service surveillées par le module de commande de service comprennent des informations d'état en service ou de fin de service de l'agent virtuel.

4. Système selon la revendication 3, dans lequel
les informations d'état de mise sous tension ou de coupure du terminal mobile surveillées par le module de commande de service comprennent également : des informations d'état de mise sous tension virtuelle et/ou de coupure virtuelle, dans lequel les informations d'état de mise sous tension virtuelle ou de coupure virtuelle sont acquises selon une ou plusieurs manière d'accès fournies pour que le terminal mobile configure la mise sous tension virtuelle ou la coupure virtuelle ;
un terminal mobile dans l'état de coupure virtuelle ne sera pas sélectionné en tant qu'agent virtuel.

5. Système selon la revendication 2, dans lequel
le module de commande de service est également configuré pour effectuer un abonnement de tiers appelant avec le terminal mobile enregistré en tant qu'agent virtuel et mémoriser des informations d'abonnement de tiers appelant dans le module de mémorisation,
les informations d'état du terminal mobile surveillées par le module de commande de service comprennent : les informations d'état lorsque le terminal mobile effectue un appel en agissant en tant qu'utilisateur d'appel ordinaire ;
le module de mémorisation est également configuré pour mémoriser les informations d'abonnement de tiers appelant,
les informations de l'agent virtuel mémorisées dans le module de mémorisation comprennent également : des informations d'état indiquant que ledit appel est en cours d'appel et/ou en fin d'appel.

6. Système selon l'une quelconque des revendications 3 à 5, comprenant également un module de surveillance connecté au module de commande de service, dans lequel
le module de commande de service est également configuré pour envoyer un message de type correspondant au module de surveillance en relation avec les informations d'état simultanément à la mémorisation des informations d'état de l'agent virtuel ;
les messages de types correspondants comprennent un ou plusieurs d'un message indiquant un état de mise sous tension réelle ou de coupure réelle dudit terminal mobile, un message indiquant un état de mise sous tension virtuelle ou de coupure virtuelle dudit terminal mobile, un message indiquant que l'agent virtuel est dans l'état en service ou dans l'état de fin de service, et un message indiquant que le terminal mobile en tant qu'utilisateur d'appel ordinaire est dans un état appelant ou dans un état de fin d'appel ;
le module de surveillance est également configuré pour déterminer et afficher un état d'un agent virtuel correspondant en fonction du message de type correspondant reçu du module de commande de service.

7. Procédé pour surveiller des agents virtuels, **caractérisé en ce qu'**il comprend :
l'exécution d'au moins un abonnement de tiers appelé avec un terminal mobile qui doit être enregistré en tant qu'agent virtuel pour faire en sorte que n'importe quel appel ordinaire appelant la station mobile entre dans le système, et la mémorisation des informations d'abonnement de tiers appelé ;
la surveillance des informations d'état du terminal mobile enregistré en tant qu'agent virtuel par l'intermédiaire d'un réseau intelligent, la mémorisation des informations d'état, et la sélection de l'agent virtuel pour servir un appel entrant en fonction des informations d'état ; et
lors de la réception d'un appel ordinaire appelant le terminal mobile qui est enregistré en tant qu'agent virtuel, la connexion de l'appel pour le terminal mobile, l'acquisition d'un état d'appel ordinaire de cet agent virtuel par l'intermédiaire du réseau intelligent et la mémorisation de l'état d'appel ordinaire.

8. Procédé selon la revendication 7, dans lequel
l'étape de surveillance des informations d'état du terminal mobile comprend : la surveillance et la mémorisation des informations d'état de mise sous tension et/ou de coupure du terminal mobile ; et/ou la surveillance et la mémorisation des informations d'état de service lorsque le terminal mobile agit en tant qu'agent virtuel.

9. Procédé selon la revendication 8, dans lequel
l'étape de surveillance des informations d'état de mise sous tension ou de coupure du terminal mobile comprend : l'envoi d'une demande à un registre des abonnés nominaux (HLR) ou à un registre de localisation des visiteurs (VLR) et la mémorisation des informations d'état de mise sous tension réelle et/ou de coupure réelle du terminal mobile renvoyées par le registre HLR ou le registre VLR ; dans lequel le terminal mobile dans un état de coupure réelle ne sera pas sélectionné en tant qu'agent virtuel ;
l'étape de surveillance des informations d'état de service comprend : l'acquisition et la mémorisation des informations d'état indiquant que l'agent virtuel est en service (306) par l'intermédiaire d'un message de réponse indiquant que l'agent virtuel est connecté à un appel renvoyé par le réseau intelligent ; ou, l'acquisition et la mémorisation des informations d'état indiquant que le service de l'agent virtuel se termine (309) par l'intermédiaire d'un message de réponse indiquant que l'agent virtuel met fin à un appel renvoyé par l'intermédiaire du réseau intelligent.

10. Procédé selon la revendication 9, dans lequel l'étape de surveillance des informations d'état de mise sous tension ou de coupure du terminal mobile comprend également :
la fourniture d'une ou de plusieurs manières d'accès pour que le terminal mobile configure la mise sous tension virtuelle ou la coupure virtuelle, la mémorisation des informations d'état de la mise sous tension virtuelle et/ou de la coupure virtuelle du terminal mobile acquises selon les manières d'accès ;
dans lequel le terminal mobile dans un état de coupure virtuelle ne sera pas sélectionné en tant qu'agent virtuel.

11. Procédé selon la revendication 10, comprenant également :
l'exécution d'un abonnement de tiers appelant avec le terminal mobile qui doit être enregistré en tant qu'agent virtuel, et la mémorisation des informations d'abonnement de tiers appelant ;
l'étape de surveillance des informations d'état du terminal mobile comprend également : la surveillance et la mémorisation des informations d'état en appel du terminal mobile en tant que tiers d'appel ordinaire ;
dans lequel l'étape de surveillance des informations d'état en appel du terminal mobile en tant que tiers d'appel ordinaire comprend :
l'acquisition et la mémorisation des informations d'état en appel du terminal mobile (406) par l'intermédiaire d'un message de réponse indiquant que le terminal mobile est connecté à l'appel renvoyé par le réseau intelligent ; ou l'acquisition et la mémorisation des informations d'état de fin d'appel de l'agent virtuel (409) par l'intermédiaire d'un message de réponse indiquant que l'agent virtuel met fin à l'appel renvoyé par le réseau intelligent.

12. Procédé selon l'une quelconque des revendications 9 à 11, comprenant également :
simultanément à la surveillance et à la mémorisation des informations d'état de l'agent virtuel, l'affichage des informations d'état de l'agent virtuel avec un type correspondant d'identifiants d'indication d'état en relation avec les informations d'état de l'agent virtuel ; dans lequel le type correspondant d'identifiants d'indication d'état comprend un ou plusieurs :
d'un identifiant indiquant un état de mise sous tension réelle ou de coupure réelle dudit terminal mobile, d'un identifiant indiquant un état de mise sous tension virtuelle ou de coupure virtuelle dudit terminal mobile, d'un identifiant indiquant que l'agent virtuel est dans un état en service ou de fin de service, et d'un identifiant indiquant que le terminal mobile en tant qu'utilisateur d'appel ordinaire est dans un état en appel ou de fin d'appel.
